# EUROPEAN PATENT APPLICATION

(11) **EP 2 371 597 A1**
(43) Date of publication of application: **05.10.2011**
(21) Application number: 10158211.2
(22) Date of filing: 29.03.2010
(51) Int. Cl.: B60J 7/06

(54) **Actuator for covering canvas of top-bodies**

(71) Applicant: Marcolin S.r.l., 33170 Pordenone (IT)
(72) Inventor: Amato, Davide, 33170, PORDENONE (IT)
(74) Representative: Feltrinelli, Secondo Andrea

(57) **Abstract**

An actuation system (10) for a covering tarpaulin of an open top-bodies (12) is described, comprising centerings (16) slidable with their own feet (17) on the top of the side panels (S) of the top-body to support and open out/pack the covering tarpaulin, and a ring of rope to move the centerings above the panel so as to open out/pack the covering tarpaulin.

In order to correct the variations in tension of the rope there are means for modifying the path of the rope in response to a variation of the tension thereof, so as to compensate for the loosening or the tightening of the rope and to keep the tension at a desired value.

## Description

The invention concerns an actuation system for covering tarpaulins of top-bodies, in particular auto-vehicle roll-off top-bodies here in the following given as an example of application.

In trucks, see for example EP 1 884 386, a tarpaulin is used to cover a trailer top-body. The tarpaulin (see also fig. 1 of EP 1 738 946) is supported by centerings or arches slidable on the side panel of the top-body which are hauled by a ring of rope, one for each side of the top-body, actuated by an electric motor. A description of such a rope system can be wholly seen for example also in EP 1 738 946. On the foot of each centering a skid is mounted so as to better slide along the panel. The ends of the rope are fixed to the skid of the first centering, which, when it is actuated by a driving pulley fitted on the shaft of the electric motor, hauls the first centering forwards and backwards along the top-body.

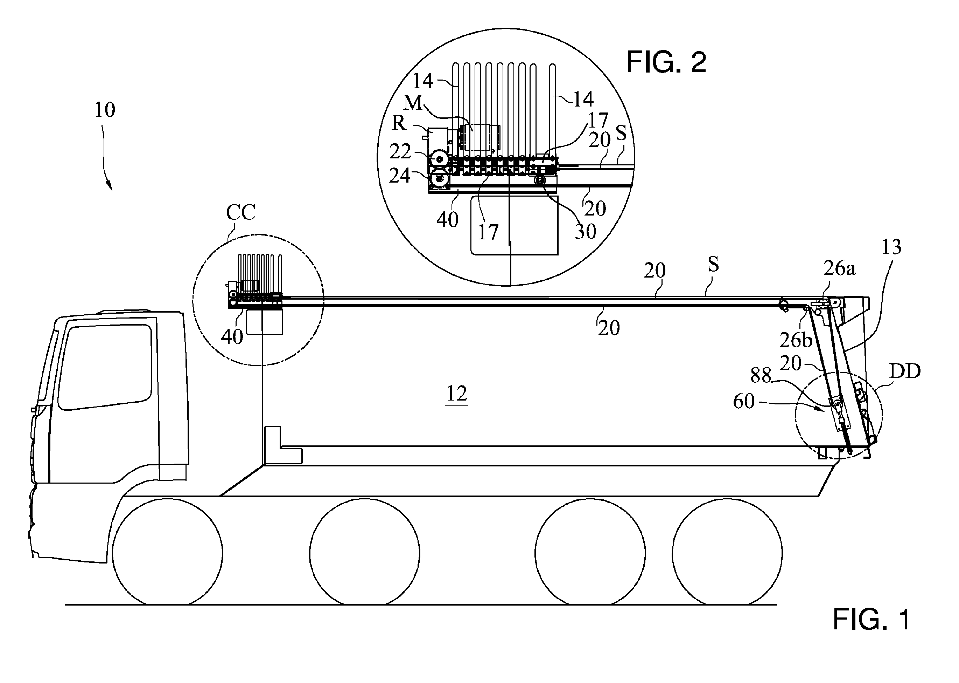

Top-bodies of trucks can be of two types: fixed (like in EP 1 884 386) or roll-off, .i.e. which can be separated as a whole from the driving cabin which transports them (like a container). The detachment of the top-body can be carried out by means of a lifting arm which couples with a hook located on the front side of the top-body, directly behind the cabin (see also Fig. 2 here).

The need to leave space for the lifting arm to manoeuvre makes it advisable to use top-bodies without a "goose bill", that is to say the horizontal edge on the front side flush with the panel. The "goose bill" is used in fixed top-bodies as a support for the packed centerings when the tarpaulin is closed, since in this way they are moved away completely from the edge of the top-body, the upper opening of which can thus be used entirely.

Recent experiments have attempted to simulate the "goose bill" also on roll-off top-bodies, so as to have its advantages. In practice an oscillating platform is mounted on a roll-off top-body where the fixed "goose bill" would be, so as to gather the packed centerings above it. When the top-body must be detached, the platform is lifted towards the top-body so as to leave room for the lifting arm (see Fig. 2 here).

This system, however, does not work due to the variation in tension of the rope. According to the actual type of the means which implement the hauling ring of rope (mainly return pulleys and an electric motor), it happens that the rope will either loosen or tighten. In the first case, the rope can come out of the pulleys and/or get caught under a skid; in the second case it can strain the pulleys or prevent the platform from moving (the rope is inextensible).

The main object of the invention is to propose an actuation system for covering tarpaulins of top-bodies, in particular roll-off top-bodies of auto-vehicles, which does not have the described drawback for the rope. Another object is to propose an actuation system which is strong and reliable. Another object is to propose an actuation system which is cost-effective and easy to mount.

Such objects are achieved with an actuation system for a covering tarpaulin of open top-bodies (the top-body with is side panels defines a load volume), comprising
- centerings slidable with their own feet on the top of the side panels of the top-body for supporting and opening out/packing the covering tarpaulin, and
- a ring of rope for moving the centerings above the panels so as to open out/pack the covering tarpaulin, and
- means for modifying the path of the rope in response to a variation of the tension thereof, so as to compensate for the loosening or the tightening of the rope and to keep the tension at a desired value.

By imposing a different path or a path variation to the rope (for example, tightening or widening the ring by means of a member in contact with the rope and able to be moved in a controlled manner) depending on its tension it is possible to keep a constant or almost constant tension.

With the invention it is preferred to carry out a monitoring of the tension of the rope in real time, so as to promptly react at each variation thereof by adapting the path of the rope to the new operative condition. It is thus possible to stabilise the tension of the rope and to prevent both loosening and tangential stresses which are too high.

The invention is very suitable for compensating the variations in tension of the rope of the roll-off top-bodies equipped with a tilting platform, as described above. However, other applications are also possible in fixed top-bodies as well, for example to compensate for the variations in tension of the rope due to thermal expansion of the top-body. It should be kept in mind that the variation in length due to normal thermal excursions (40 C°) in an aluminium top-body of 9m is of 3cm, which is enough to create operating problems.

In some variants means sensitive to the tension of the rope are used, which are separate from the means for modifying the path. In this case the tension detected by the sensitive means will be a parameter on whose basis the modifying means act upon the rope and/or upon its path.

The means sensitive to the tension of the rope can be mechanical or for example electronic.

The means for modifying the path of the rope can be exclusively mechanical, or servo-assisted, or controlled actuation systems. It is preferred to use a return member or a member mounted in contact with the rope, since it is a simple and robust solution. By controlling the position of the member, it can deviate the rope to a greater or lesser extent and thus tighten or widen its ring. Examples of such a controlled member are a hydraulic piston or an electric actuator pushing against the rope, a pulley, a cam-shaped pulley or an eccentric which can be oriented on command. Another example is a pulley or a return member having a variable diameter, which is able to vary the surface around which the rope winds or runs on command.

In the mechanical variants it is preferred to use elastic means adapted for elastically counteracting a variation in the path of the rope and for making its path return to the unchanged configuration. This has the advantage of making a system which can adapt to the tension of the rope, very simple, effective and strong.

It is preferred to use means for adjusting the (idle) force exerted by the elastic means at rest, so as to be able to adjust the preload on the modifying means and thus set the idle tension of the rope.

Other preferred variants, which like the previous ones can be used by themselves or in a combination, are defined in the dependent claims.

The invention and its advantages shall in any case become clearer from the following description of an example embodiment and from the attached drawing, in which:
Fig. 1 shows a side view of an actuation system according to the invention with the centerings packed;
Fig. 2 shows an enlarged detail comprised in the circle CC with broken lines of Fig. 1;
Fig. 3 shows a view of the detail of Fig. 2 in a different configuration;
Fig. 4 shows an enlarged three-dimensional view of a detail comprised in the circle DD with broken lines of Fig. 1.
Fig. 5 shows a side view of the detail of Fig. 4.

Fig. 1 shows an actuation system for a truck 10 with a roll-off top-body 12. Some centerings or arches 16 can slide along the panel S of the top-body 12, and support a covering tarpaulin (not shown).

The centerings 16 run on the panel S through frictionless skids 17. The first two centerings of the series, those closest to the rear of the top-body 12, share the same skid, which is about twice as wide as the others, for a greater moving stability.

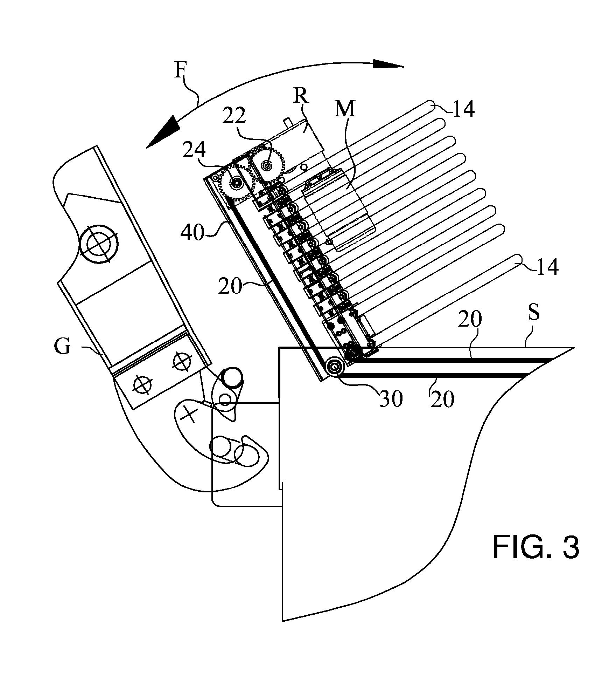

In figs. 1 and 3 the centerings 16 are shown all gathered above a platform 40, which is hinged to the front side of the top-body 12 and which can constitute a cantilevered horizontal projection of the panel S. The platform 40 can be, for example, a C-shaped plate mounted across the top-body 12.

At the centre of the platform 40 an electric motor M is mounted, which actuates a mechanical reducer R the output of which is connected so as to actuate a gear wheel 22, which engages with a toothed pulley 24. A rope 20, which forms a ring that runs along the entire side of the top-body 12, is wound on the pulley 24, the rotation axis of which is arranged at the free end of the platform 40. In particular, the ring of rope 20 runs along the top-body 12 almost entirely, remaining slightly under the edge of panel S. Then near to a rear door 13 it is deviated downwards by pulleys 26a, 26b until it reaches a pulley 88 of means 60 adapted for modifying its path so as to thus compensate for any loosening or tightening thereof and for keeping its tension at a desired value.

The platform 40, see arrow F in Fig. 2, can be lifted and inclined with respect to a horizontal plane, so as to uncover the underlying side of the top-body 12 and make it possible for a lifting arm G to hook onto the top-body 12 to detach it.

The rotation of the platform 40 generally induces variations in tension of the rope 20.

It is advantageous but optional to add a pulley 30 onto the top-body 12 near to and below the hinging axis of the platform 40. The rope 20 passes with its lower segment below the pulley 30 and then it goes back returned by the pulley 24. When the platform 40 is lifted, the ring of rope 20 tends to widen, but this tendency is compensated by the means 60, as shall now be explained.

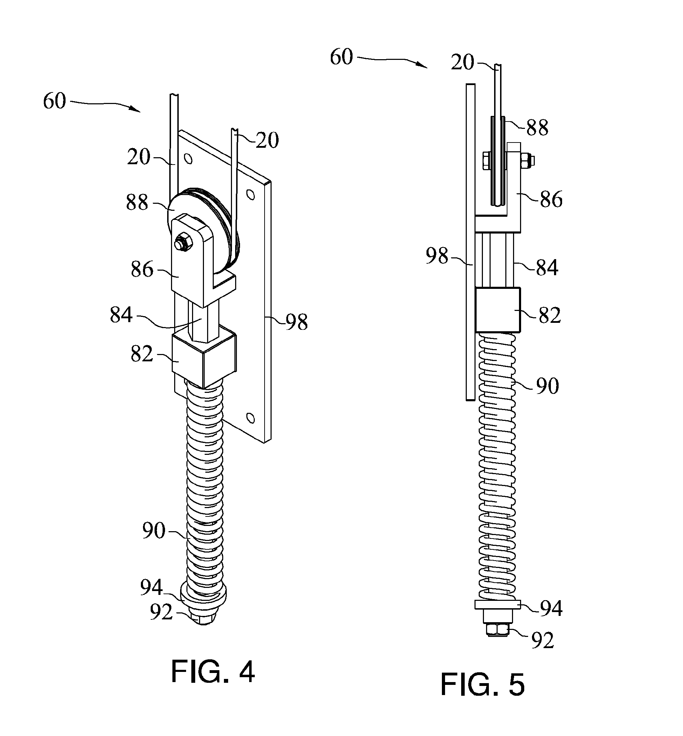

The means 60 comprise (figs. 4 and 5) a pulley 88 mounted on a support which is linearly movable and made up of an L-shaped bracket 86 fixed onto a stem 84. The stem 84 can run inside and goes through a block 82 fixed to the top-body 12 through a fixing plate 98.

Between the block 82 and an adjustable end abutment on the stem 84, there is a spring 90. The abutment can be made, for example, like a disc 94 in contact with the spring 90 and adapted to be adjusted through a bolt 92 screwed onto a threaded portion of the stem 84. By screwing the bolt 92 on the stem 84, the position of the disc 94 can be varied and the degree of compression of the spring 90 can be set.

The rope 20 is wound around the pulley 88, and the spring 90 is preloaded by sufficiently screwing the bolt 92 on the stem 84.

The preload of the spring 90 ensures that the rope 20 is tight when the platform 40 is horizontal, since the pulley 88 is pulled towards the block 82, i.e. towards outside of the ring of rope 20 with the result of tightening it.

By lifting the platform 40, the rope 20 arranges around the pulley 30 and stretches even more. The pulley 88 "feels" the increase in tension and transmits it to the stem 84, which makes the spring 90 compress even more. The pulley 88 thus moves to track the rope 20, keeping it always tight. It is sufficient to choose a "soft" spring 90 in order to not strain the rope 20 too much; preferred values for its constant are from 7 N/m to about 8 N/m.

When the platform 40 is brought back to the horizontal position, the rope 20 loosens; the spring 90 extends and the pulley 88 goes back into the original position, still keeping the rope 20 tight.

## Claims

1. Actuation system (10) for a covering tarpaulin of open top-bodies (12), comprising
- centerings (16) slidable with their own feet (17) on the top of the side panels (S) of the top-body for supporting and opening out/packing the covering tarpaulin, and
- a ring of rope (20) for moving the centerings above the panel so as to open out/pack the covering tarpaulin, **characterised in that** it comprises
- means (60) for modifying the path of the rope in response to a variation of the tension thereof, so as to compensate for the loosening or the tightening of the rope and to keep the tension at a desired value.

2. Actuation system according to claim 1, wherein the means for modifying (60) comprise elastic means (90) adapted for elastically counteracting a variation in the path of the rope and for making its path return to the unchanged configuration.

3. Actuation system according to claim 2, wherein the means for modifying (60) comprise means (92, 94) for adjusting the force exerted by the elastic means at rest.

4. Actuation system according to one of the previous claims, wherein the means for modifying comprise a structure (60) or member with variable geometry or shape which engages the rope and is configured so that a variation in its geometry or shape entails a variation in said path.

5. Actuation system according to one of the previous claims, wherein the means for modifying comprise a return member (88) or a member mounted in contact with the rope, said member having a controllable position to deviate the rope to a greater or lesser extent and therefore tighten or widen its ring.

6. Actuation system according to one of the previous claims, wherein the means for modifying comprise a pulley or a variable diameter return member, able to vary on command the surface around which the rope is wound or runs.

7. Actuation system according to claim 5, wherein the means for modifying comprise a pulley (88) which is mounted movable on the top-body and on which the rope is engaged.

8. Actuation system according to claims 7 and 2, comprising
- a support (84) mounted movable with respect to the top-body, said pulley being hinged on the support, and
- elastic means (90) coupled with the support adapted for counteracting a movement thereof and for making it return elastically into an initial position.

9. Actuation system according to claim 8, comprising
- a stem (84) for rotatably supporting the pulley,
- a guiding element (82) for the stem fixed onto the top-body, the stem being mounted on the guiding element so as to be able to move linearly with respect to the top-body; and
- a spring (90) cooperating with the stem to exert an elastic force on it adapted for counteracting a movement thereof and for making it return elastically into an initial position.

10. Actuation system according to claim 9, wherein the spring is mounted on the stem between the guiding element and an abutment (94) integral with the stem.

11. Actuation system according to claim 10, comprising means (92) for adjusting the position of the abutment on the stem.

12. Actuation system according to anyone of the previous claims, comprising a platform (40) hinged to the front edge of the top-body to receive and support all the centerings when the tarpaulin is packed, wherein on the free end of the platform there are return means (24) for returning the rope on the top-body, a return pulley (30) being hinged at the hinging axis of the platform so that the rope can bend around the return pulley when the platform is being lifted.

13. Actuation system according to claim 12, wherein on the foot of the first centering closest to the rear side of the top-body there are anti-lifting means adapted for locking said first centering on the platform when the platform is being lifted.

14. Actuation system according to claim 13, wherein the anti-lifting means comprise means for non permanent hooking to a fixed abutment integral with the platform.

15. Actuation system according to any one of the previous claims, comprising means sensitive to the tension of the rope, said means for modifying being adapted for carrying out a variation in the path according to the tension detected by the sensitive means.
